(19) **Europäisches Patentamt**
**European Patent Office**
**Office européen des brevets**

(11) **EP 3 735 332 B1**

(12) **EUROPÄISCHE PATENTSCHRIFT**

(45) Veröffentlichungstag und Bekanntmachung des Hinweises auf die Patenterteilung:
**10.11.2021 Patentblatt 2021/45**

(21) Anmeldenummer: **18807073.4**

(22) Anmeldetag: **20.11.2018**

(51) Int Cl.:
**B23K 26/06** (2014.01)   **B23K 26/067** (2006.01)
**B23K 26/0622** (2014.01)   **B23K 26/352** (2014.01)
**G02B 6/02** (2006.01)   **G03F 7/20** (2006.01)

(86) Internationale Anmeldenummer:
**PCT/EP2018/081895**

(87) Internationale Veröffentlichungsnummer:
**WO 2019/134769 (11.07.2019 Gazette 2019/28)**

(54) **OPTISCHE ANORDNUNG ZUR DIREKTEN LASERINTERFERENZSTRUKTURIERUNG**

OPTICAL ARRANGEMENT FOR DIRECT LASER INTERFERENCE STRUCTURING

DISPOSITIF OPTIQUE POUR LA STRUCTURATION DIRECTE D'INTERFÉRENCES LASER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.01.2018 DE 102018200036**

(43) Veröffentlichungstag der Anmeldung:
**11.11.2020 Patentblatt 2020/46**

(73) Patentinhaber: **FRAUNHOFER-GESELLSCHAFT zur Förderung der angewandten Forschung e.V. 80686 München (DE)**

(72) Erfinder:
• **EL-KHOURY, Mikhael**
  **01277 Dresden (DE)**

• **LASAGNI, Andrés Fabián**
  **01723 Grumbach (DE)**
• **ALAMRI, Sabri**
  **01067 Dresden (DE)**
• **KUNZE, Tim**
  **01277 Dresden (DE)**
• **VOISIAT, Bogdan**
  **01067 Dresden (DE)**

(74) Vertreter: **Pfenning, Meinig & Partner mbB Patent- und Rechtsanwälte An der Frauenkirche 20 01067 Dresden (DE)**

(56) Entgegenhaltungen:
EP-A1- 0 668 519    EP-A1- 2 431 120
DE-A1-102011 011 734    DE-A1-102011 119 764
US-A1- 2004 227 927    US-A1- 2014 204 436

## Beschreibung

Die Erfindung betrifft eine optische Anordnung zur direkten Laserinterferenzstrukturierung (DLIP), mit der eine Strukturierung an Oberflächen von Werkstücken oder Bauteilen aus unterschiedlichsten Werkstoffen ausgebildet werden kann. Dabei muss die Oberfläche nicht zwingend die direkte nach außen weisende Oberfläche sein. Es kann auch eine Oberfläche sein, die von einem für die eingesetzte Laserstrahlung zumindest teilweise transparenten Werkstoff überdeckt ist.

Mit diesem Verfahren lassen sich hochaufgelöste Strukturierungen ausbilden, so dass an die verwendeten optischen Elemente und ihre Anordnung zueinander hohe Anforderungen gestellt werden, um die erforderlichen Interferenzeffekte nutzen zu können.

Dabei sollte die Aufteilung eines Laserstrahls in Teilstrahlen und die Strahlführung entlang des optischen Weges so erfolgen, dass nur geringe Leistungsverluste auftreten. Die von den einzelnen Teilstrahlen zurück gelegten Wege sollten sich nicht bzw. nur sehr geringfügig unterscheiden, besonders wenn Ultrakurzpuls-Laserquellen benutzt werden. Ein wichtiger Faktor ist auch die Möglichkeit der Veränderung der Interferenzperiode ∧ je nach Anforderung. Natürlich ist anzustreben, die Kosten und den Justageaufwand für eine bei der DLIP einsetzbaren Anordnung so klein als möglich zu halten.

Die Teilung eines Laserstrahls in mehrere Teilstrahlen erfolgt üblicherweise mit Strahlteilern, Prismen oder diffraktiven optischen Elementen (DOEs).

So gibt es Konfigurationen mit reflektierenden Elementen, mit denen jedoch keine Beeinflussung der Interferenzperiode ∧ möglich ist. Diese Ausführungsformen sind aber weder kompakt, noch kostengünstig sowie justieranfällig.

Es ist auch bekannt, ein DOE mit zwei optischen Linsen einzusetzen. Auch damit kann keine Veränderbarkeit der Interferenzperiode ∧ erreicht werden. Obwohl die Strahlteilung mit DOE eine praktische und kompakte Lösung darstellt, gibt es signifikante Leistungsverluste infolge des eingesetzten diffraktiven Elements. Darüber hinaus besitzen DOEs eine niedrige Zerstörschwelle, hohe Herstellungskosten und es kann lediglich für eine Wellenlänge einer Laserstrahlung ausgelegt werden.

Zum Erzeugen von Interferenzmustern sind auch Konfigurationen mit zwei Bi-Prismen bekannt. Dabei muss ein auftreffender Laserstrahl einen Strahlquerschnitt aufweisen, mit dem eine signifikante Fläche eines Prismas überdeckt werden kann. Das Verteilungsverhältnis der Energie für die Teilstrahlen ist stark von der Ausrichtung und Anordnung der Prismen abhängig. Zudem können nicht mehr als zwei miteinander interferierende Teilstrahlen genutzt werden.

Bei einer Ausführungsform mit einem diffraktiven Element und einem Bi-Prisma wirken sich ebenfalls die durch das diffraktive Element bedingten Leistungsverluste nachteilig aus. Es kann zwar eine Beeinflussung bzw. eine Veränderung der Interferenzperiode ∧ durch Änderung des Teilstrahlabstandes erreicht werden, jedoch bleibt die Konfiguration weiterhin kostenintensiv und es kann zudem keine symmetrische Dreistrahlinterferenz realisiert werden.

Auch hier kann ein DOE lediglich für eine Wellenlänge ausgelegt werden.

So sind aus DE 10 2012 011 343 A1 eine Vorrichtung und ein Verfahren zur Interferenzstrukturierung von Proben sowie so hergestellte Proben bekannt.

DE 10 2011 119 764 A1 betrifft eine Vorrichtung und ein Verfahren zur Interferenzstrukturierung von flächigen Proben.

Eine optische Anordnung zur Laserinterferenzstrukturierung ist in DE 10 2011 101415 A1 offenbart.

Eine Vorrichtung, Anordnung und ein Verfahren zur Interferenzstrukturierung sind in DE 10 2011 011 734 A1 beschrieben.

US 6,549,309 B1 betrifft eine Holografievorrichtung mit der holografische Muster hergestellt werden können.

Eine Laserabstandsmesseinrichtung ist aus US 2010/0033731 A1 bekannt.

US 2004/227927 A1, EP 0 668 519 A1, US 2014/204436 A1 und EP 2 431 120 A1 stellen weitere relevante Druckschriften dar.

Es ist daher Aufgabe der Erfindung, Möglichkeiten für die direkte Laserinterferenzstrukturierung anzugeben, die mit einem einfachen und kostengünstigen optischen Aufbau verbunden sind, der flexibel an verschiedene Strukturierungsaufgaben angepasst werden kann, bei dem Laserstrahlung mit unterschiedlichen Wellenlängen eingesetzt und mit dem eine Veränderung der Interferenzperiode ∧ auf einfache und sichere Weise möglich ist. Erfindungsgemäß wird diese Aufgabe mit einer optischen Anordnung, die die Merkmale des Anspruchs 1 aufweist, gelöst. Vorteilhafte Ausgestaltungen und Weiterbildungen der Erfindung können mit in untergeordneten Ansprüchen bezeichneten Merkmalen realisiert werden.

Bei der erfindungsgemäßen optischen Anordnung zur direkten Laserinterferenzstrukturierung ist ein von einer Laserstrahlungsquelle emittierter Laserstrahl auf ein in einem Winkel von 45 ° in Bezug zur optischen Achse des Laserstrahls mit seiner reflektierenden Oberfläche ausgerichtetes den Laserstrahl reflektierendes Element gerichtet.

Der mit dem reflektierenden Element reflektierte Laserstrahl trifft auf einen ersten Strahlteiler auf, mit dem der reflektierte Laserstrahl in zwei Teilstrahlen geteilt wird. Ein Teilstrahl, der mit dem ersten Strahlteiler erhalten worden ist, wird mittels des ersten Strahlteilers reflektiert und seine optische Achse in Richtung eines fokussierenden optischen Elements umgelenkt.

Bei einer ersten erfindungsgemäßen Alternative trifft ein zweiter durch den ersten Strahlteiler transmittierter Teilstrahl auf einen ersten Pentaspiegel, insbesondere einen Dach-Pentaspiegel (engl. roof-pentamirror) oder ein Pentaprisma auf und wird damit nach mehrfacher Reflexion und/oder Brechung parallel zu optischen Achse des ersten Teilstrahls auf das fokussierende optische Element gerichtet.

Bei einer zweiten erfindungsgemäßen Alternative ist ein mit dem ersten Strahlteiler erhaltener transmittierter zweiter Teilstrahl auf einen zweiten Strahlteiler gerichtet, mit dem der zweite Teilstrahl in einen reflektierten dritten Teilstrahl und den am zweiten Strahlteiler transmittierten Anteil des zweiten Teilstrahls aufgeteilt und der reflektierte dritte Teilstrahl parallel zur optischen Achse des ersten reflektierten Teilstrahls des ersten Strahlteilers mit einem ersten Pentaspiegel, insbesondere einem Dach-Pentaspiegel oder einem Pentaprisma auf das fokussierende Element und der transmittierte Anteil des zweiten Teilstrahles auf einen zweiten Pentaspiegel, insbesondere einen Dach-Pentaspiegel oder ein Pentaprisma und damit nach mehrfacher Reflexion und/oder Brechung parallel zu den optischen Achsen des ersten Teilstrahls und des reflektierten dritten Teilstrahls auf das fokussierende optische Element gerichtet ist.

Bei beiden Alternativen werden die mit ihren optischen Achsen parallel zueinander ausgerichteten Teilstrahlen mit dem fokussierenden optischen Element, das bevorzugt eine Linse ist, zur Ausbildung einer Strukturierung an oder im Bereich einer Oberfläche miteinander interferierend auf diese Oberfläche gerichtet.

Außerdem soll das reflektierende Element bei Einhaltung des Winkels von 45 ° parallel zur optischen Achse des von der Laserstrahlquelle emittierten Laserstrahls zur Beeinflussung der Interferenzperiode $\wedge$ verschiebbar sein. Dies betrifft insbesondere die Ausrichtung, Anordnung und Position der reflektierenden Fläche des reflektierenden Elements, mit der die Umlenkung des Laserstrahls um 45 ° erreicht wird.

Das reflektierende Element sollte vorteilhaft über einen maximalen Weg entlang der optischen Achse verschiebbar sein, der der Länge einer Kathete eines gleichschenkligen Dreiecks entspricht, bei dem die Länge der Fläche des ersten Strahlteilers die Hypothenuse ist. Die Länge der Kathete ist dabei der Weg den beispielsweise eine äußere Kante des reflektierenden Elements bei der Verschiebung zurücklegt. So kann eine maximale Bandbreite bei der Variation der Interferenzperiode $\wedge$ ausgenutzt werden.

Im Strahlengang mindestens eines Teilstrahles kann eine planparallele Wellenplatte vor dem fokussierenden optischen Element angeordnet sein. Damit kann die Polarisation des jeweiligen Teilstrahles individuell beeinflusst werden.

Vorteilhaft können im Strahlengang des ersten Teilstrahls reflektierende Elemente so angeordnet sein, dass der erste, der zweite Teilstrahl und gegebenenfalls ein dritter Teilstrahl bis zum Auftreffen auf das fokussierende optische Element jeweils einen gleich langen Weg zurück legen. Der erste Teilstrahl kann dabei mehrfach aus und wieder in die ursprüngliche optische Achse reflektiert werden. Dies ist insbesondere beim Einsatz von Pico- oder Femtosekundenlaserstrahlquellen notwendig.

Die Teilstrahlen können auch durch ein zwischen dem ersten Strahlteiler, dem/den Pentaspiegel oder dem Pentaprisma, den Pentaspiegeln oder Pentaprismen und dem fokussierenden Element angeordnetes Dove-Prisma gerichtet werden. Die Teilstrahlen werden dabei gebrochen und reflektiert. Die Hauptachse des Dove-Prisma ist dabei parallel und deckungsgleich zur optische Achse OA.

Das Dove-Prisma kann bei der Strukturierung um eine Achse, die die die optische Achse OA oder eine Achse die parallel zu den parallel zueinander ausgerichteten optischen Achsen der Teilstrahlen ausgerichtet ist, gedreht werden. Damit ist die Ausbildung von Interferenzmustern mit unterschiedlicher Winkelausrichtung auf der jeweiligen Oberfläche bei der Ausbildung der Strukturierung möglich.

Bei der ersten erfindungsgemäßen Alternative soll der erste Strahlteiler so ausgebildet sein, dass Energieanteile im Verhältnis 50 : 50 für einen ersten Teilstrahl und einen zweiten Teilstrahl erhalten werden, wenn zwei Teilstrahlen miteinander interferierend auf die jeweilige Oberfläche gerichtet sind.

Bei der zweiten erfindungsgemäßen Alternative sollte der erste Strahlteiler aber so ausgebildet sein, dass Energieanteile im Verhältnis 33 : 66 für einen ersten Teilstrahl und einen zweiten Teilstrahl und der zweite Strahlteiler dann so ausgebildet sein, dass Energieanteile im Verhältnis 50 : 50 für einen ersten Teilstrahl des zweiten Teilstrahls und einen dritten Teilstrahl erhalten werden, wenn drei Teilstrahlen miteinander interferierend auf die jeweilige Oberfläche gerichtet sind.

Bei der Erfindung können Laserstrahlen mit unterschiedlichen Wellenlängen eingesetzt werden, ohne dass eine weitere Anpassung an der Anordnung vorgenommen werden muss. Es können auch verschiedene Laserpulslängen beim Laserbetrieb problemlos genutzt werden.

Der Laserstrahl kann direkt von der Laserstrahlquelle auf das reflektierende Element gerichtet werden. Zwischen Laserstrahlquelle und dem reflektierenden Element können auch die Brennweite beeinflussende und den Querschnitt des Laserstrahls formende optische Elemente im Strahlengang des Laserstrahls angeordnet sein.

Durch die Variation der Position des reflektierenden Elements kann der Abstand zwischen den parallel zueinander ausgerichteten optischen Achsen der Teilstrahlen verändert werden. Mit einer Verschiebung der reflektierenden Fläche des reflektierenden Elements in Richtung Laserstrahlquelle kann der Abstand der Teilstrahlen zueinander vergrößert und bei einer Bewegung in die entgegengesetzte Richtung verkleinert werden, was zu entsprechenden Interferenzperioden $\wedge$ und entsprechend ausgebildeten Strukturen an der jeweiligen Oberfläche führt.

Die Veränderung der Strukturperiode $\wedge$ eines ausgebildeten Interferenzmusters folgt dabei der folgen-

den Gleichung:

$$\Lambda = \lambda/(2 \sin(\tan^{-1}(h+2)/f)).$$

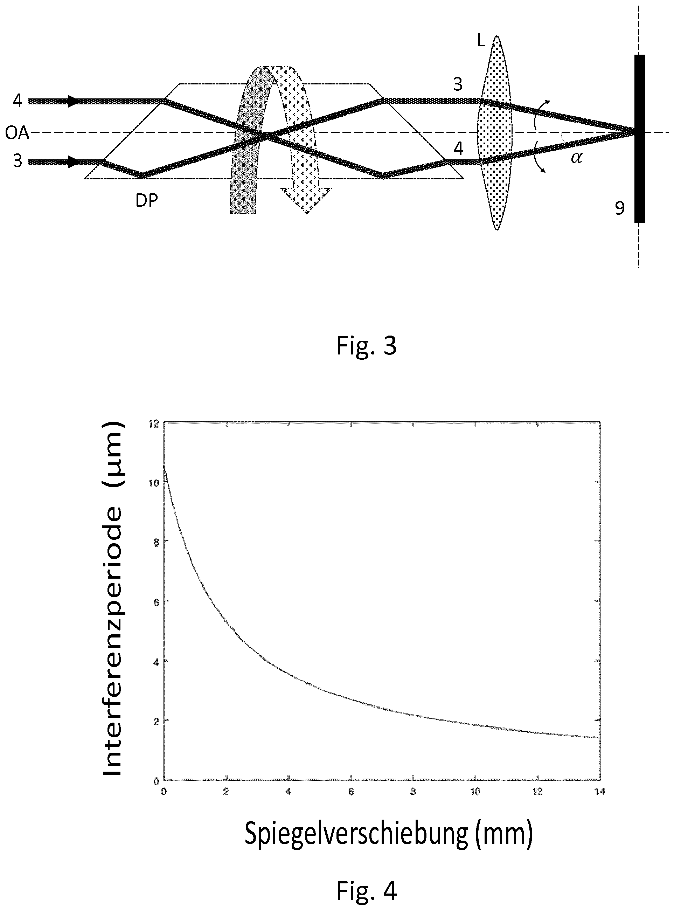

Dabei ist $\lambda$ die Wellenlänge der verwendeten Laserstrahlung, f die Brennweite des fokussierenden optischen Elements und L und h der Weg der Verschiebung der reflektierenden Fläche des reflektierenden Elements. Ein Diagramm zur Veranschaulichung ist in Figur 4 gezeigt.

Nachfolgend soll die Erfindung beispielhaft näher erläutert werden. Dabei können die Merkmale unabhängig vom jeweiligen Einzelbeispiel oder seiner Darstellung in einer Figur miteinander kombiniert werden und sind nicht an das jeweilige einzelne Beispiel oder die einzelne Darstellung gebunden.

Dabei zeigen:

Figur 1a u. b in schematischer Form ein Beispiel einer erfindungsgemäßen optischen Anordnung mit zwei interferierenden Teilstrahlen und die Beeinflussung der Interferenzperiode durch Bewegung eines reflektierenden Elements;

Figur 2 eine schematische Darstellung eine zweiten Beispiels einer erfindungsgemäßen Anordnung mit drei interferierenden Teilstrahlen;

Figur 3 zwei durch ein Dove-Prisma geführte Teilstrahlen;

Figur 4 ein Diagramm, das die Beeinflussung der Interferenzperiode in $\mu$m mittels der Bewegung des reflektierenden Elements in mm verdeutlicht und

Figur 5 Beispiele für Strukturelemente, die mit einer erfindungsgemäßen Anordnung bei wechselnder Polarisationsrichtung herstellbar sind.

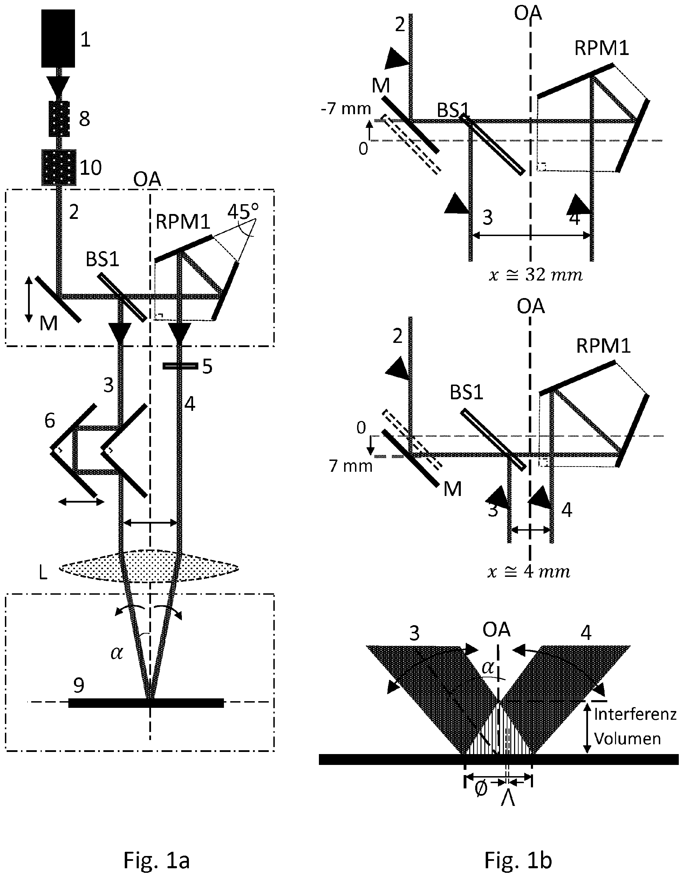

Figur 1a zeigt eine schematische Darstellung eines Beispiels einer erfindungsgemäßen Anordnung, bei der zwei Teilstrahlen 3 und 4, die miteinander interferierend auf eine zu strukturierende Oberfläche eines Werkstückes 9 gerichtet sind.

Es wird ein Laserstrahl 2 von einer Laserstrahlungsquelle 1 auf ein reflektierendes Element M, dessen reflektierende Fläche in einem Winkel von 45 ° in Bezug zur optischen Achse des von der Laserstrahlungsquelle 1 emittierten Laserstrahls 2 ausgerichtet ist, gerichtet. Der reflektierte Laserstrahl 2 trifft auf einen ersten Strahlteiler BS1 auf, dessen Fläche auf die der Laserstrahl 2 auftrifft um 45 ° zu dieser optischen Achse geneigt ist. An dieser Fläche wird ein Teil der Laserstrahlung reflektiert und so ein erster Teilstrahl 3 mit einer optischen Achse, die parallel zur optischen Achse des ursprünglich von der Laserstrahlungsquelle 1 emittierten Laserstrahls 2 in Richtung auf ein fokussierendes Element L reflektiert.

Ein Teil der Laserstrahlung des Laserstrahls 2 transmittiert durch den ersten Strahlteiler BS 1 so dass ein zweiter Teilstrahl 4 auf reflektierende Flächen eines Dach-Pentaspiegels RPM1 auftrifft. Der zweite Teilstrahl 4 wird damit so reflektiert, dass er parallel zur optischen Achse des ersten Teilstrahls 3 in Richtung des fokussierenden Elements L gerichtet wird.

Mit dem fokussierenden Element L werden die Teilstrahlen 3 und 4 miteinander interferierend in Richtung auf die Oberfläche des Werkstücks 9, auf der eine Strukturierung ausgebildet werden sollen, fokussiert bzw. abgelenkt.

Bei dem in Figur 1a gezeigten Beispiel ist im Strahlengang des zweiten Teilstrahls 4 zwischen den ersten Dach-Pentaspiegeln RPM1 und dem fokussierenden Element L eine planparallele Wellenplatte ($\lambda$/2-Platte) 5 angeordnet.

Im Strahlengang des ersten Teilstrahls 3 sind zwischen dem ersten Strahlteiler BS1 und dem fokussierenden Element L reflektierende Elemente 6 angeordnet. Die reflektierenden Elemente 6 sind so angeordnet und mit ihren reflektierenden Flächen auf die der erste Teilstrahl 3 auftrifft, so ausgerichtet, dass die Differenz der Wege, die der erste Teilstrahl 3 und der zweite Teilstrahl 4 ausgehend vom ersten Strahlteiler BS1 bis zum Auftreffen auf das fokussierende Element L zurücklegen, kompensiert und beide Teilstrahlen 3 und 4 dabei zumindest nahezu bzw. vollständig die gleiche Wegstrecke zurück legen.

Bei dem in Figur 1a gezeigten Beispiel sind im Strahlengang des Laserstrahls 2 im Anschluss an die Laserstrahlquelle 1 noch ein optisches Teleskop 8 und mindestens ein den Laserstrahl 2 formendes Element 10 angeordnet.

Mit dem Doppelpfeil soll angedeutet werden, dass das reflektierende Element M translatorisch und parallel zur optischen Achse des von der Laserstrahlquelle 1 emittierten und in seiner Richtung noch nicht veränderten Laserstrahls 2 bewegbar ist, um die Interferenzperiode $\Lambda$ der beiden Teilstrahlen 3 und 4 zu verändern.

In Figur 1b ist gezeigt, wie sich eine translatorische Verschiebung des reflektierenden Elements M auswirkt. In der oberen Darstellung von Figur 1b ist das reflektierende Element M in Richtung auf die Laserstrahlquelle 1 mit einem Betrag von 7 mm ausgehend von einer Mittellage verschoben. Dadurch wird die optische Achse des mit dem reflektierenden Element M abgelenkten Laserstrahls 2 ebenfalls in Richtung der Laserstrahlquelle 1 verschoben. Dies hat zur Folge, dass sich der Abstand zwischen den optischen Achsen der beiden Teilstrahlen 3 und 4 und dadurch auch die Interferenzperiode $\Lambda$ vergrößert.

In der mittleren Darstellung von Figur 1b ist das reflektierende Element M in Richtung auf die Laserstrahlquelle 1 ebenfalls mit einem Betrag von 7 mm ausgehend von einer Mittellage in die von der Laserstrahlungsquelle 1 weg weisende Richtung translatorisch verschoben. Dadurch wird die optische Achse des mit dem reflektierenden Element M abgelenkten Teil des Laserstrahls 2 ebenfalls von der Laserstrahlquelle 1 weg verschoben. Dies hat zur Folge, dass sich der Abstand zwischen den optischen Achsen der beiden Teilstrahlen 3 und 4 und dadurch auch die Interferenzperiode ∧ verkleinert.

In Figur 1b ganz unten ist eine Teildarstellung der Strahlengänge der beiden Teilstrahlen 3 und 4 nach dem Durchdringen des fokussierenden Elements L gezeigt. In einem Bereich oberhalb der Oberfläche des Werkstücks 9, die strukturiert werden soll, ist das Interferenzvolumen, das mit den interferierenden Teilstrahlen 3 und 4 erreicht werden kann, gezeigt.

In Figuren 1 a und b bezeichnet OA die mittlere optische Achse der erhaltenen Teilstrahlen 3 und 4.

Der erste Strahlteiler BS1 teilt den Laserstrahl 2 so, dass die Teilstrahlen 3 und 4 zumindest annähernd die gleiche Energie aufweisen.

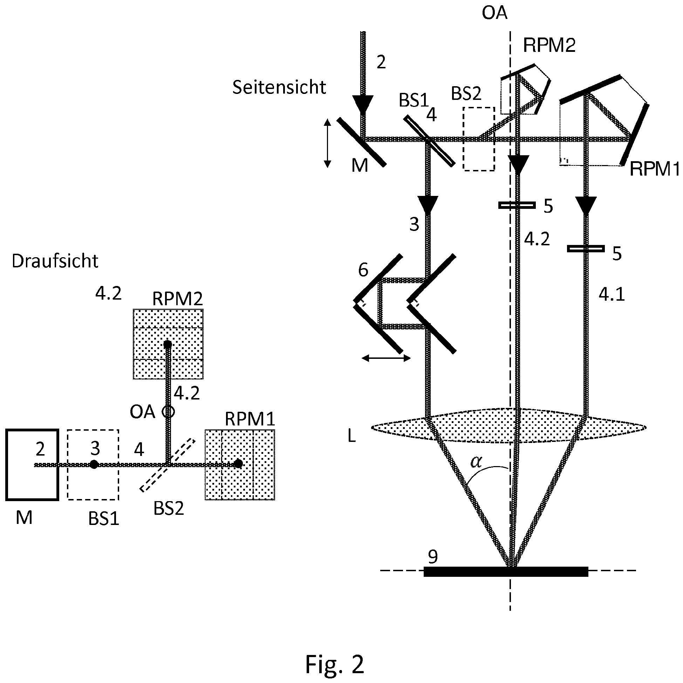

In Figur 2 ist ein weiteres Beispiel einer erfindungsgemäßen Anordnung gezeigt. Dabei wird, wie beim Beispiel nach Figur 1a und b ein Laserstrahl 2 auf eine Fläche eines reflektierenden Elements M gerichtet und von dort zu dem ersten Strahlteiler BS1 reflektiert. Ein erster Teilstrahl 3 wird vom ersten Strahlteiler BS1 in Richtung einer Oberfläche eines Werkstücks 9 reflektiert. Der durch den ersten Strahlteiler BS1 transmittierte Teilstrahl 4 wird auf einen zweiten Strahlteiler BS2 gerichtet. Dabei trifft ein mit dem zweiten Strahlteiler erhaltener erster Teilstrahl 4.1 auf reflektierende Flächen eines Dach-Pentaspiegels RPM1 auf. Ein zweiter mit dem zweiten Strahlteiler BS2 erhaltener Teilstrahl 4.2 trifft auf reflektierende Flächen eines Dach-Pentaspiegels RPM2 auf. Die Teilstrahlen 4.1 und 4.2 werden mit den RPM 1 und RPM 2 in Richtung auf die zu strukturierende Oberfläche des Werkstücks 9 reflektiert.

Bis auf die Aufteilung in drei Teilstrahlen 3, 4.1 und 4.2 unterscheidet sich das Beispiel nach Figur 2 nicht vom Beispiel nach den Figuren 1a und b. Auch bei diesem Beispiel können Teilstrahlen 4.1 und 4.2 mit einer planparallelen Wellenplatte (λ/2-Platte) 5 definiert polarisiert werden. Im Strahlengang des ersten Teilstrahls 3 können zwischen dem ersten Strahlteiler BS1 und dem fokussierenden Element L reflektierende Elemente 6 angeordnet sein, die zur Weglängenkompensation der Teilstrahlen 3, 4.1 und 4.2 genutzt werden können. Die drei Teilstrahlen 3, 4.1 und 4.2 können mit dem fokussierenden optischen Element L auf die jeweilige Oberfläche gerichtet werden.

In der linken Darstellung von Figur 2 ist dieses Beispiel in einer Aufsicht gezeigt.

Figur 3 zeigt schematisch zwei durch ein Dove-Prisma DP geführte Teilstrahlen 3 und 4. Die Teilstrahlen 3 und 4 werden dabei mehrfach gebrochen und reflektiert und dadurch in ihrer Richtung verändert. Durch eine Drehung des Dove-Prisma DP um die optische Achse OA kann eine Veränderung der Ausrichtung der miteinander interferierenden Teilstrahlen 3 und 4 erreicht werden, was wiederum neben der Interferenz mit entsprechender Interferenzperiode ∧ zu einer möglichen Veränderung der Ausrichtung von auszubildenden Strukturelementen auf der Oberfläche 9 führen kann.

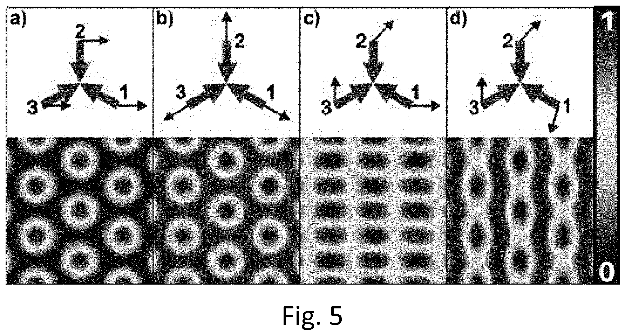

In Figur 5 sind vier verschiedene mit der Erfindung herstellbare berechnete Interferenzprofilintensitäten gezeigt, die wiederum dementsprechend ausbildbaren Strukturelementen entsprechen. Die Veränderungen können allein durch eine Veränderung der Polarisation von Teilstrahlen realisiert werden. Mit den Pfeilen sind die dabei genutzten Polarisationsvektoren verdeutlicht. Die Polarisation kann man mit den planparallelen Wellenplatten 5 entsprechend anpassen.

Die Polarisation kann mit λ/2-Platten für jeden Teilstrahl individuell durchgeführt werden. Figur 5a zeigt eine Situation, in der jeder Teilstrahl eine gleichartig orientierte Polarisation aufweist. Mittels Drehung der Wellenplatte können weitere Polarisationszustände realisiert werden, so dass die Polarisation jedes Teilstrahles 60° (Figur 5b), 45° (Figur 5c) oder willkürlich (Figur 5d) orientiert ist.

## Patentansprüche

1. Optische Anordnung zur direkten Laserinterferenzstrukturierung, bei der ein von einer Laserstrahlquelle (1) emittierter Laserstrahl (2) auf ein in einem Winkel von 45 ° in Bezug zur optischen Achse des Laserstrahls (2) mit seiner reflektierenden Oberfläche geneigtes, den Laserstrahl (2) reflektierendes Element (M) gerichtet ist und

   a- der mit dem reflektierenden Element (M) reflektierte Laserstrahl auf einen ersten Strahlteiler (BS1) auftrifft, mit dem der reflektierte Laserstrahl in zwei Teilstrahlen (3 und 4) geteilt und ein Teilstrahl (3), der mit dem ersten Strahlteiler (BS1) erhalten worden ist, mittels des ersten Strahlteilers (BS1) reflektiert und seine optische Achse in Richtung eines fokussierenden optischen Elements (L) umgelenkt wird; und
   b1- ein zweiter durch den ersten Strahlteiler (BS1) transmittierter Teilstrahl (4) auf einen ersten Pentaspiegel (RPM1) oder
   b2- ein Pentaprisma auftrifft und damit nach mehrfacher Reflexion und/oder Brechung parallel zur optischen Achse des ersten Teilstrahls (3) auf das fokussierende optische Element (L) gerichtet
   oder
   c1- ein mit dem ersten Strahlteiler (BS1) erhaltener zweiter Teilstrahl (4) auf einen zweiten Strahlteiler (BS2) gerichtet ist, mit dem der zweite Teilstrahl (4) in einen ersten Teilstrahl (4.1) des zweiten Teilstrahls (4) und einen dritten Teilstrahl (4.2) aufgeteilt und der erste Teilstrahl (4.1) des zweiten Teilstrahls (4) parallel zur optischen Achse des ersten Teilstrahls (3) mit einem ersten Pentaspiegel (RPM1) oder

c2- einem Pentaprisma auf das fokussierende Element (L) und der zweite Teilstrahl (4.2) des zweiten Teilstrahles (4) auf einen zweiten Pentaspiegel (RPM2) oder Pentaprisma auftrifft und damit nach mehrfacher Reflexion und/oder Brechung parallel zu den optischen Achsen des ersten Teilstrahls (3) und des ersten Teilstrahls (4.1) des zweiten Teilstrahls (4) auf das fokussierende optische Element (L) gerichtet ist; und

d- die Teilstrahlen (3, 4, 4.1, 4.2) mit dem fokussierenden optischen Element (L) zur Ausbildung einer Strukturierung an oder im Bereich einer Oberfläche miteinander interferierend auf diese Oberfläche gerichtet sind; und

e- das reflektierende Element (M) bei Einhaltung des Winkels von 45 ° parallel zur optischen Achse des von der Laserstrahlquelle (1) emittierten Laserstrahls (2) zur Beeinflussung der Interferenzperiode ∧ translatorisch verschiebbar ist.

2. Anordnung nach Anspruch 1, **dadurch gekennzeichnet, dass** das reflektierende Element (M) über einen maximalen Weg h verschiebbar ist, der der Länge einer Kathete eines gleichschenkligen Dreiecks entspricht, bei dem die Länge der Fläche des ersten Strahlteilers (BS1) auf die der mit dem reflektierenden Element (M) abgelenkte Laserstrahl (2) auftrifft, die Hypothenuse ist.

3. Anordnung nach einem der vorhergehenden Ansprüche, **dadurch gekennzeichnet, dass** im Strahlengang mindestens eines Teilstrahles (4, 4.1, 4.2) eine planparallele Wellenplatte (5) vor dem fokussierenden optischen Element (L) angeordnet ist.

4. Anordnung nach einem der vorhergehenden Ansprüche, **dadurch gekennzeichnet, dass** im Strahlengang des ersten Teilstrahls (3) reflektierende Elemente (6) so angeordnet sind, dass der erste, der zweite Teilstrahl und gegebenenfalls ein dritter Teilstrahl (3, 4, 4.1 und 4.2) bis zum Auftreffen auf das fokussierende optische Element (L) jeweils einen gleich langen Weg zurück legen.

5. Anordnung nach einem der vorhergehenden Ansprüche, **dadurch gekennzeichnet, dass** die Teilstrahlen (3, 4, 4.1, 4.2) durch ein zwischen dem ersten Strahlteiler (BS1), dem/den Pentaspiegel (RPM1) oder dem Pentaprisma, den Pentaspiegeln (RPM1, RPM2) oder Pentaprismen und dem fokussierenden Element (L) angeordnetes Dove-Prisma (DP) gerichtet sind.

6. Anordnung nach dem vorhergehenden Anspruch, **dadurch gekennzeichnet, dass** das Dove-Prisma (DP) um eine Achse, die parallel zu den parallel zueinander ausgerichteten optischen Achsen der Teilstrahlen (3, 4, 4.1, 4.2) ausgerichtet ist, drehbar ist.

7. Anordnung nach einem der vorhergehenden Ansprüche, **dadurch gekennzeichnet, dass** ein erster Strahlteiler (BS1) so ausgebildet ist, dass Energieanteile im Verhältnis 50 : 50 für einen ersten Teilstrahl (3) und einen zweiten Teilstrahl (4) erhalten werden, wenn zwei Teilstrahlen (3 und 4) miteinander interferierend auf die jeweilige Oberfläche gerichtet sind oder

ein erster Strahlteiler (BS1) so ausgebildet ist, dass Energieanteile im Verhältnis 33 : 66 für einen ersten Teilstrahl (3) und einen zweiten Teilstrahl (4) und der zweite Strahlteiler (BS2) so ausgebildet ist, dass Energieanteile im Verhältnis 50 : 50 für einen ersten Teilstrahl (4.1) des zweiten Teilstrahls (4) und einen dritten Teilstrahl (4.2) erhalten werden, wenn drei Teilstrahlen (3, 4.1 und 4.2) miteinander interferierend auf die jeweilige Oberfläche gerichtet sind.

**Claims**

1. An optical arrangement for direct laser interference structuring, in which a laser beam (2) emitted by a laser beam source (1) is directed onto an element (M) which reflects the laser beam (2) and is inclined at an angle of 45° with respect to the optical axis of the laser beam (2) with its reflective surface and

a- the laser beam reflected by the reflective element (M) impinges on a first beam splitter (BS1), with which the reflected laser beam is split into two partial beams (3 and 4) and a partial beam (3) that has been obtained with the first beam splitter (BS1) is reflected by means of the first beam splitter (BS1) and its optical axis is deflected in the direction of a focusing optical element (L); and

b1- a second partial beam (4) transmitted through the first beam splitter (BS1) impinges on a first pentamirror (RPM1) or

b2- a pentaprism and thus, after multiple reflection and/or refraction, is directed onto the focusing optical element (L) parallel to the optical axis of the first partial beam (3) or

c1- a second partial beam (4) obtained with the first beam splitter (BS1) is directed onto a second beam splitter (BS2) with which the second partial beam (4) is split into a first partial beam (4.1) of the second partial beam (4) and a third partial beam (4.2) and the first partial beam (4.1) of the second partial beam (4) impinges, parallel to the optical axis of the first partial beam (3), with a first pentamirror (RPM1) or

c2- a pentaprism, on the focusing element (L) and the second partial beam (4.2) of the second partial beam (4) impinges on a second pentamirror (RPM2) or pentaprism and thus, after multiple reflection and/or refraction, is directed parallel to the optical axes of the first partial beam (3) and the first partial beam (4.1) of the second partial beam (4) onto the focusing optical element (L);

and

d- the partial beams (3, 4, 4.1, 4.2) with the focusing optical element (L) for forming a structuring on or in the region of a surface are directed onto this surface in a mutually interfering manner;

and

e- the reflective element (M), while maintaining the angle of 45° parallel to the optical axis of the laser beam (2) emitted by the laser beam source (1), is translationally displaceable for influencing the interference period Λ.

2. The arrangement according to claim 1, **characterized in that** the reflective element (M) is displaceable over a maximum path h which corresponds to the length of a cathetus of an isosceles triangle, in which the length of the surface of the first beam splitter (BS1) on which the laser beam (2) deflected by the reflective element (M) impinges is the hypotenuse.

3. The arrangement according to any one of the preceding claims, **characterized in that** a plane-parallel wave plate (5) is arranged in front of the focusing optical element (L) in the beam path of at least one partial beam (4, 4.1, 4.2).

4. The arrangement according to any one of the preceding claims, **characterized in that** reflective elements (6) are arranged in the beam path of the first partial beam (3) so that the first, the second partial beam and, optionally, a third partial beam (3, 4, 4.1 and 4.2) each cover an equally long path before impinging on the focusing optical element (L).

5. The arrangement according to any one of the preceding claims, **characterized in that** the partial beams (3, 4, 4.1, 4.2) are directed through a Dove prism (DP) arranged between the first beam splitter (BS1), the pentamirror (RPM1) or the pentaprism, the pentamirrors (RPM1, RPM2) or pentaprisms and the focusing element (L).

6. The arrangement according to the preceding claim, **characterized in that** the Dove prism (DP) is rotatable about an axis which is aligned parallel to the optical axes of the partial beams (3, 4, 4.1, 4.2) that are aligned parallel to one another.

7. The arrangement according to any one of the preceding claims, **characterized in that** a first beam splitter (BS1) is designed so that energy components in the ratio 50:50 are obtained for a first partial beam (3) and a second partial beam (4) if two partial beams (3 and 4) are directed onto the respective surface in a mutually interfering manner or

a first beam splitter (BS1) is designed so that energy components in the ratio 33:66 for a first partial beam (3) and a second partial beam (4) and the second beam splitter (BS2) is designed so that energy components in the ratio 50:50 for a first partial beam (4.1) of the second partial beam (4) and a third partial beam (4.2) are obtained when three partial beams (3, 4.1, and 4.2) are directed onto the respective surface in a mutually interfering manner.

## Revendications

1. Dispositif optique pour la structuration directe d'interférences laser, pour lequel un faisceau laser (2) émis par une source de faisceau laser (1) est dirigé sur un élément (M) incliné selon un angle de 45° par rapport à l'axe optique du faisceau laser (2) avec sa surface réfléchissante, réfléchissant le faisceau laser (2) et

a- le faisceau laser réfléchi avec l'élément (M) réfléchissant frappe un premier séparateur de faisceau (BS1), avec lequel le faisceau laser réfléchi est divisé en deux faisceaux partiels (3 et 4) et un faisceau partiel (3), qui a été obtenu avec le premier séparateur de faisceau (BS1), est réfléchi au moyen du premier séparateur de faisceau (BS1) et son axe optique est renvoyé en direction d'un élément optique de focalisation (L) ; et

b1- un deuxième faisceau partiel (4) transmis par le premier séparateur de faisceau (BS1) est dirigé sur un premier miroir de Penta (RPM1) ou

b2- frappe un prisme de Penta et est ainsi dirigé après réflexion et/ou réfraction multiple parallèlement à l'axe optique du premier faisceau partiel (3) sur l'élément optique de focalisation (L) ou

c1- un deuxième faisceau partiel (4) obtenu avec le premier séparateur de faisceau (BS1) est dirigé sur un deuxième séparateur de faisceau (BS2), avec lequel le deuxième faisceau partiel (4) est divisé en un premier faisceau partiel (4.1) du deuxième faisceau partiel (4) et un troisième faisceau partiel (4.2) et le premier faisceau partiel (4.1) du deuxième faisceau partiel (4) parallèlement à l'axe optique du premier faisceau partiel (3) avec un premier miroir de Penta (RPM1) ou

c2- un prisme de Penta frappe l'élément optique de focalisation (L) et le deuxième faisceau partiel (4.2) du deuxième faisceau partiel (4) un deuxième miroir de Penta (RPM2) ou prisme de Penta et est ainsi dirigé après réflexion et/ou réfraction multiple parallèlement aux axes optiques du premier faisceau partiel (3) et du premier faisceau partiel (4.1) du deuxième faisceau partiel (4) sur l'élément optique de focalisation (L) ;
et

d- les faisceaux partiels (3, 4, 4.1, 4.2) avec l'élément optique de focalisation (L) pour la réalisation d'une structuration sur ou dans la zone d'une surface sont dirigés sur cette surface de manière à interférer les uns avec les autres ;
et

e- l'élément (M) réfléchissant peut être déplacé en translation, en conservant l'angle de 45° parallèlement à l'axe optique du faisceau laser (2) émis par la source de faisceau laser (1) pour influencer la période d'interférence Λ.

2. Dispositif selon la revendication 1, **caractérisé en ce que** l'élément (M) réfléchissant peut être déplacé sur une course maximale h, qui correspond à la longueur d'un côté de l'angle droit d'un triangle équilatéral, pour lequel la longueur de la surface du premier séparateur de faisceau (BS1) que le faisceau laser (2) dévié avec l'élément (M) réfléchissant frappe, est l'hypoténuse.

3. Dispositif selon l'une des revendications précédentes, **caractérisé en ce qu'**une lame d'onde (5) à plan parallèle est disposée devant l'élément optique de focalisation (L) dans le trajet optique d'au moins un faisceau partiel (4, 4.1, 4.2).

4. Dispositif selon l'une des revendications précédentes, **caractérisé en ce que** des éléments (6) réfléchissants sont disposés dans le trajet optique du premier faisceau partiel (3), de sorte que le premier, le deuxième faisceau partiel et le cas échéant un troisième faisceau partiel (3, 4, 4.1 et 4.2) parcourent respectivement un chemin de même longueur jusqu'à venir frapper l'élément optique de focalisation (L).

5. Dispositif selon l'une des revendications précédentes, **caractérisé en ce que** les faisceaux partiels (3, 4, 4.1, 4.2) sont dirigés par un prisme de Dove (DP) disposé entre le premier faisceau partiel (BS1), le/les miroirs de Penta (RPM1) ou le prisme de Penta, les miroirs de Penta (RPM1, RPM2) ou prismes de Penta et l'élément de focalisation (L).

6. Dispositif selon la revendication précédente, **caractérisé en ce que** le prisme de Dove (DP) peut tourner autour d'un axe, qui est orienté parallèlement aux axes optiques orientés les uns par rapport aux autres des faisceaux partiels (3, 4, 4.1, 4.2).

7. Dispositif selon l'une des revendications précédentes, **caractérisé en ce qu'**un premier faisceau partiel (BS1) est réalisé de sorte que des parts d'énergie dans le rapport 50 : 50 pour un premier faisceau partiel (3) et un deuxième faisceau partiel (4) sont obtenues, lorsque deux faisceaux partiels (3 et 4) sont dirigés sur la surface respective de manière à interférer l'un avec l'autre ou
un premier faisceau partiel (BS1) est réalisé de sorte que des parts d'énergie dans le rapport 33 : 66 pour un premier faisceau partiel (3) et un deuxième faisceau partiel (4) et le deuxième faisceau partiel (BS2) est réalisé de sorte que des parts d'énergie dans le rapport 50 : 50 pour un premier faisceau partiel (4.1) du deuxième faisceau partiel (4) et un troisième faisceau partiel (4.2) sont obtenues, lorsque trois faisceaux partiels (3, 4.1 et 4.2) sont dirigés sur la surface respective de manière à interférer les uns avec les autres.

Fig. 1a

Fig. 1b

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012011343 A1
- DE 102011119764 A1
- DE 102011101415 A1
- DE 102011011734 A1
- US 6549309 B1

- US 20100033731 A1
- US 2004227927 A1
- EP 0668519 A1
- US 2014204436 A1
- EP 2431120 A1